# EUROPÄISCHE PATENTSCHRIFT

(11) **EP 3 069 423 B1**
(45) Veröffentlichungstag und Bekanntmachung des Hinweises auf die Patenterteilung: **08.04.2020**
(21) Anmeldenummer: 14796104.9
(22) Anmeldetag: 10.11.2014
(51) Int. Cl.: H02G 11/00, F16G 13/16

(54) **LEITUNGSFÜHRUNG**
LINE GUIDE
GUIDE DE LIGNE

(30) Priorität: 14.11.2013 DE 202013105149 U
(43) Veröffentlichungstag der Anmeldung: 21.09.2016
(73) Patentinhaber: Igus GmbH, 51147 Köln (DE)
(72) Erfinder: STRACK, Stefan, 53639 Königswinter (DE)
(74) Vertreter: Lippert Stachow Patentanwälte Rechtsanwälte
(86) Internationale Anmeldenummer: PCT/EP2014/074197
(87) Internationale Veröffentlichungsnummer: WO 2015/071227

(56) Entgegenhaltungen:
- WO-A1-01/48885
- DE-T2- 60 107 000
- DE-U1-202012 010 236
- US-A- 3 473 769
- US-A- 5 806 811
- US-A- 6 161 373
- US-A1- 2003 183 411

## Beschreibung

Die Erfindung betrifft allgemein eine Leitungsführung zum geschützten Führen mindestens einer Leitung, wie z.B. eines Kabels, eines Schlauchs oder dergleichen, zwischen einem festen und einem beweglichen Anschlusspunkt.

Typischerweise kann eine Leitungsführung mehrere Leitungen aufnehmen. Ein sehr verbreitetes Beispiel einer Leitungsführung ist die sogenannte Energieführungskette. Diese besteht aus einzelnen Gliedern, welche meist aus Einzelteilen zusammengesetzt sind. Die Patente DE3531066C2, EP0803032B1 bzw. EP1381792B1 der Anmelderin beschreiben solche Energieführungsketten mit Gliedern aus zwei, vier bzw. sechs Einzelteilen. Solche Ketten haben sich sehr bewährt. Sie sind robust und zuverlässig, jedoch aufwendig in der Herstellung bzw. im Zusammenbau. DE202012010236U1 beschreibt ein weiteres Bespiel einer Energieführungskette aus einzelnen Gliedern, die durch eine Gelenkverbindung miteinander verbunden sind. Die Energieführungskette nach DE202012010236U1 ist mit einem Spannseil ausgerüstet, um die Gelenkverbindung zwischen den Gliedern zu entlasten.

Die vorliegende Erfindung betrifft keine Kette aus einzelnen Gliedern, sondern eine Leitungsführung gemäß dem Oberbegriff aus Anspruch 1. Bei dieser Leitungsführung ist zumindest ein Längsabschnitt mit mehreren Segmenten, oder die gesamte Leitungsführung mit allen Segmenten aus einem Stück hergestellt. Jedes dieser Segmente umfasst einen schließbaren Halter zum Halten bzw. Umgeben der mindestens einen Leitung quer zur Längsrichtung der Leitungsführung. So kann die Leitung bei offenem Halter in einen Aufnahmeraum des jeweiligen Segments eingelegt werden und ist im Aufnahmeraum bei geschlossenem Halter bzw. in Schließstellung des Halters quer zur Längsrichtung gehalten. Zwecks Bildung eines Umlenkbogens sind die Segmente durch eine flexible Verbindung in Längsrichtung miteinander verbunden.

Gattungsgemäße, teilweise oder vollständig einstückig hergestellte Leitungsführungen sind ebenfalls bereits bekannt, beispielsweise aus der Patentanmeldung WO 98/40645 A1 oder dem US-Patent US 3,473,769. Solche weitgehend einstückig herstellbaren Leitungsführungen sind insbesondere für Anwendungen mit großen Stückzahlen und relativ kurzer Führungslänge geeignet.

Eine weitere Leitungsführung die weitgehend einstückig hergestellt ist, nämlich durch Extrudieren eines Strangs, wurde in WO 01/48885 A1 vorgeschlagen. Auch bei dieser Lösung wird als Gelenkverbindung ein bandartiger Tragwandbereich genutzt, der radial innen am Umlenkbogen liegt. WO 01/48885 A1 betrifft eine Verstärkungsfaser die parallel zur Strangrichtung im Tragwandbereich vorgesehen wird.

Eine Leitungsführung speziell zur Versorgung von Kfz-Sitzen ist aus dem Patent EP1138555B1 bekannt. Bei dieser einstückig hergestellten Leitungsführung sind schließbare Halter vorgesehen, d.h. die Leitungen können anwendungsspezifisch nach Herstellung der Leitungsführung eingelegt werden und ggf. nachträglich auch getauscht werden.

Aus der DE102005004453A1 oder der EP1761982B1 sind andere Leitungsführungen, speziell für die Automobilindustrie vorbekannt.

Nachteilig bei der Leitungsführung gemäß EP1761982B1 ist insbesondere, dass die Leitungsführung einstückig durch Umgießen, Umspritzen oder Umschäumen der Leitungen hergestellt wird. Somit ist keine unabhängige Herstellung der Leitungsführung bzw. keine wahlweise Bestückung mit Leitungen möglich. Die Leitungskonfektionierung wird bei Herstellung der Leitungsführung bestimmt. Eine Vor-Ort-Montage oder z.B. eine Ausstattung nach Kundenwunsch ist so nicht möglich. Ferner erfordert die Reparatur einer einzelnen Leitung den Austausch der Leitungsführung.

Nachteilig bei allen vorbekannten Lösungen ist insbesondere, dass die neutrale Faser, bezogen auf den nutzbaren Aufnahmeraum, stets radial ganz außen oder radial ganz innen liegt.

Dies führt, im Vergleich z.B. zu Energieführungsketten, zu unerwünschten Belastungen der Leitungen bei der Bewegung.

Die neutrale Faser, auch Nulllinie genannt, ist der Bereich der Führung dessen Länge sich beim Biegen bzw. beim Bewegen des Umlenkbogens nicht verändert. Dies ist somit die Schicht im Querschnitt in welcher eine Biegung keine Zug- oder Druckspannungen verursacht. Idealerweise sollten die Leitungen auf Höhe der neutralen Faser der Leitungsführung liegen.

Aus der Patentschrift DD256449A1 ist ein Kabel- und Schlauchschlepp bekannt, der einteilig hergestellt ist und zugleich eine günstige Lage der neutralen Faser aufweist. Nachteilig hierbei ist jedoch, dass diese Leitungsführung nur im Extrusionsverfahren herstellbar ist und nachträglich bearbeitet werden muss. Somit sind die Gestaltungsmöglichkeiten einer Energieführung gemäß DD256449A1 sehr eingeschränkt. Kostengünstige Großserien z.B. für die Automobilindustrie sind hiermit nur bedingt möglich. Zudem ist das Einlegen der Leitungen hier recht umständlich.

Eine Aufgabe der vorliegenden Erfindung ist es mithin, eine Leitungsführung vorzuschlagen, welche eine günstige Lage der neutralen Faser erzielt und zugleich eine kostengünstige Herstellung ermöglicht. Die Leitungsführung soll teilweise oder vollständig aus einem Stück hergestellt werden können und insbesondere für die Automobilindustrie, z.B. für den elektrischen Anschluss eines verstellbaren Kfz-Sitzes, geeignet sein.

Erfindungsgemäß wird diese Aufgabe dadurch gelöst, dass die flexible Verbindung zwischen den Segmenten einen ersten flexiblen Strang sowie einen zweiten flexiblen Strang umfasst und dass zwischen diesen mindestens ein Querverbinder vorgesehen ist und einstückig mit den Strängen hergestellt wird.

Erfindungsgemäß ist der mindestens eine Querverbinder so ausgeführt oder zumindest in der betriebsbereiten Anordnung der Leitungsführung, d.h. in der Schließstellung der Halter, derart angeordnet, dass die beiden flexiblen Stränge seitlich des Aufnahmeraums für die Leitung(en) liegen. Hierdurch geben die beiden Stränge eine neutrale Faser vor, welche den Aufnahmeraum für die Leitung(en) kreuzt. Mit anderen Worten, eine gedachte Fläche durch beide Stränge verläuft durch den Aufnahmeraum bzw. durchquert diesen. Folglich werden die einzubringenden Leitungen in betriebsfertiger Anordnung zumindest in etwa auf Höhe der neutralen Faser liegen.

Die neutrale Faser bzw. Nulllinie wird hierbei vorzugsweise ausschließlich durch die räumliche Lage der beiden flexiblen Stränge vorgegeben bzw. definiert. Die Lagebestimmung der flexiblen Stränge wiederum kann so erfindungsgemäß weitestgehend oder ausschließlich durch die Gestalt bzw. Formgebung des bzw. der Querverbinder vorgegeben werden.

Insbesondere und zumindest im Bereich eines oder mehrerer geschlossener Halter, verläuft der Querverbinder hierbei bogen- oder bügelförmig um die Längsrichtung der Energieführung. So kommen beide flexible Stränge in eine Lage seitlich des Aufnahmeraums für die Leitung(en).

Das Vorsehen von zwei separaten flexiblen Strängen zur flexiblen Verbindung der Segmente einerseits, in Zusammenspiel mit einer erfindungsgemäß einstellbaren oder dauerhaft vorgegeben Form des bzw. der Querverbinder andererseits, ermöglicht eine günstige Lage der neutralen Faser. Andererseits ermöglicht die vorgeschlagene Gestaltung eine Herstellung durch effiziente Verfahren, insbesondere im Spritzgussverfahren.

Der Begriff des schließbaren Halters ist vorliegend im weitesten Sinne zu verstehen, als eine Vorrichtung, welche die Leitung(en) in Richtung quer zur Längsrichtung hält. Geeignet ist z.B. ein kanalartiger bzw. U-förmiger Abschnitt mit schließbarem Quersteg (ähnlich WO98/40645A1 oder EP1138555B1), ein klapp- oder biegsamer Haltebügel (ähnlich US 3,473,769), oder eine Gestaltung in der Art einer Bügelschelle usw. Der Halter kann wie ein Einwegverschluss zur einmaligen Verwendung lediglich einmal schließbar sein, sodass die Leitungen zumindest wahlweise konfektioniert können. Bevorzugt sind jedoch Halter bzw. Verschlüsse, die sich mehrfach öffnen und schließen lassen. Dies ermöglicht nachträgliche Reparatur oder Änderung der Leitungsbestückung.

Besonders ist eine Ausführung, bei welcher die beiden Stränge zumindest in der Schließstellung bzw. Betriebsanordnung etwa mittig seitlich des Aufnahmeraums liegen, d.h. eine neutrale Faser definieren, welche den Aufnahmeraum etwa auf halber Höhe kreuzt bzw. durchquert. Diese Lage entspricht bei gefülltem Aufnahmeraum der Optimallage zur Minimierung der Belastungen der Leitung(en). Grundsätzlich kann jeweils über mehrere Segmente oder über die Gesamtlänge der ein in Längsrichtung einstückig durchgehender Querverbinder zur Lagebestimmung der Stränge vorgesehen sein.

Besonders bevorzugt wird jedoch eine Ausführungsform, in welcher jedes Segment einen oder mehrere gesondert vorgesehene Querverbinder aufweist. So sind unter anderem Materialeinsparungen möglich. Ein Freiraum ist demnach jeweils zwischen zwei benachbarten Querverbindungen vorgesehen, welcher ggf. auch das Biegen oder das Falten erleichtert.

Besonders bevorzugt wird eine Ausführung, bei welcher zu jedem schließbaren Halter genau ein zugeordneter Querverbinder vorgesehen ist.

Jeder Querverbinder ist zweckmäßig an der gleichen Längsposition wie die sonstigen Bestandteile des Halters angeordnet bzw. geformt. Die schließbaren Teile des Halters können jedoch auch längsversetzt gegenüber gesondert vorgesehenen Querverbindern angeordnet sein.

Bevorzugt weist jedes Segment genau einen Querverbinder auf. Unter dem Begriff Segment wird vorliegend ein regelmäßiger bzw. periodischer Längsabschnitt verstanden, welcher jeweils einen oder mehrere, insbesondere genau einen Halter umfasst.

Die Herstellung der Leitungsführung, insbesondere im Spritzgussverfahren, kann dadurch erleichtert werden, dass die Querverbinder zumindest teilweise oder vollständig biegsam oder faltbar hergestellt sind. Dementsprechend nehmen die Querverbinder erst in der Schließstellung jeweils den gewünschten bogen- oder bügelförmigen Verlauf an, insbesondere auf Höhe des entsprechend geschlossenen Halters. Die Querverbinder können insbesondere einen rundbogenförmigen Verlauf bei biegsamen Querverbindern oder einem etwa vieleckförmigen Verlauf bei faltbaren Querverbindern annehmen. Auch eine Kombination hiervon ist möglich, z.B. wenn die Querverbinder teilweise biegsam und teilweise faltbar hergestellt sind. In derartigen Ausführungen lässt sich die Leitungsführung zunächst in einer verhältnismäßig flachen Anordnung herstellen. Sie kann anschließend, z.B. beim Einbau, in die betriebsbereite Form gebracht werden, insbesondere durch Biegen bzw. Falten. Die gewünschte seitliche Lage der flexiblen Stränge kann somit durch das ohnehin erforderliche Schließen der Halter erreicht werden.

Alternativ oder ergänzend ist es möglich, die Querverbinder ganz bzw. teilweise biegesteif herzustellen. Unter Verwendung einer ggf. aufwändigeren Spritzgussform lässt sich z.B. eine Leitungsführung mit insgesamt biegesteifen Querverbindern herstellen, deren bügelförmiger Verlauf um die Längsrichtung mehr oder weniger dauerhaft vorgegeben ist. Letztgenannte Ausführung hat den Vorteil, den Montageaufwand weiter zu reduzieren, ist jedoch u.U. aufwendiger in der Herstellung der Leitungsführung.

Unabhängig davon, ob die Stränge erst nachträglich, z.B. durch Biegen und/oder Falten der Querverbinder, in die gewünschte Lage gebracht werden, oder die Querverbinder dauerhaft eine günstige Lage der neutralen Faser vorgeben, ist es zweckmäßig, wenn jeder Halter der Leitungsführung einen mechanischen Verschluss zum Schließen des Halters aufweist. Grundsätzlich kommen hierzu alle geeigneten Verschlusstypen in Fragen, insbesondere solche, welche durch Einrasten, Verhaken, Verriegeln usw. oder eine Kombination hiervon. Zweckmäßig soll der geschlossene Halter den Aufnahmeraum für die Leitung(en) umfänglich schließen, d.h. diesen vollumfänglich umgeben.

Eine besonders einfache Ausführung eines mechanischen Verschlusses weist jeweils einen oder mehrere Schnapphaken auf, vorzugsweise zwei zusammenwirkende Schnapphaken. Diese können am Endbereich eines biegeelastischen Querfortsatzes, beispielsweise in Verlängerung der Querverbinder, angeformt sein. Letztgenannte Ausführung ist zweckmäßig bei dauerhafter Formgebung der Querverbinder und/oder in Kombination mit Anschlagflächen an den Querverbindern.

In einer bevorzugten Ausführung mit mechanischem Verschluss, insbesondere in Kombination mit einer biegsamen und/oder faltbaren Ausführung der Querverbinder, wird vorgesehen, dass jeder mechanische Verschluss stirnseitige Anschlagflächen aufweist. Am Verschluss können insbesondere zwei in Längsrichtung vorstehende Längsvorsprünge mit stirnseitigen Anschlagflächen vorgesehen sein. Entsprechende Anschlagflächen können jedenfalls durch geeignete Formgebung des mechanischen Verschlusses selbst bereitgestellt werden. Sie ermöglichen es, in Strecklage der Leitungsführung Biegelast aufzufangen und somit ein unerwünschtes Durchbiegen der Leitungsführung zu verhindern, insbesondere des freitragenden Obertrums. Unter Verwendung entsprechender Anschläge können die flexiblen Stränge relativ biegeelastisch bzw. mit geringstmöglicher Rückstellkraft ausgeführt sein. So wird eine Bewegung (Längsverschiebung des Umlenkbogens) mit besonders geringem Widerstand ermöglicht.

Alternativ hierzu, insbesondere bei einer Ausführung mit dauerhafter Formgebung der Querverbinder, kann vorgesehen werden, dass nicht die mechanischen Verschlüsse, sondern jeder biegesteife Querverbinder zwei Längsvorsprünge mit stirnseitigen Anschlagflächen aufweist. Auch dies fangen in Strecklage der Leitungsführung Biegelasten auf, um ein Durchbiegen, insbesondere des Obertrums, zu verhindern. Grundsätzlich sind die Teile mit Anschlagflächen jedenfalls Außen in Bezug auf den Umlenkbogen angeordnet.

Unabhängig von der gewählten Anordnung der Anschlagflächen ist es zweckmäßig, wenn die Längsabmessung zwischen den Anschlagflächen etwa gleich groß oder leicht größer ist als die regelmäßige Segmentlänge in Längsrichtung eines Segments der Leitungsführung. Bei leicht größerer Abmessung zwischen den Anschlagflächen wird eine Vorspannung, insbesondere am Obertrum, ermöglicht.

Bei Bedarf können auch zur Radiusbegrenzung des Umlenkbogens weitere Anschlagflächen mit geringerem Längsabstand angeordnet werden, d.h. je nach Lage an den Querverbindern oder an den Verschlüssen, innen in Bezug auf den Umlenkbogen. Bei hinreichender großer Steifigkeit bzw. geringer Elastizität der Stränge ist dies jedoch nicht erforderlich.

In einer einfachen Ausführung der Leitungsführung bilden jeweils ein mechanischer Verschluss und ein Querverbinder zusammen bzw. gemeinsam einen Halter. Sie bilden vorzugsweise einen bügelartigen Halter, beispielsweise nach dem Prinzip einer Bügelschelle oder einer ähnlichen Haltevorrichtung. Hierdurch lässt sich ein besonders materialsparender Aufbau der einzelnen Segmente der Leitungsführung realisieren, welche im Wesentlichen aus zwei Strangabschnitten, einem Querverbinder und den Bestandteilen des mechanischen Verschlusses, hergestellt sind. Bevorzugt liegen der Verschluss und der Querverbinder auf der gleichen Längsposition entlang der Stränge. In diesem Fall ist der Aufnahmeraum der vom Halter umgebene Raum.

In einer zweckmäßigen Ausführungsform ist vorgesehen, dass beide Stränge im Wesentlichen parallel (d.h. technisch parallel) verlaufen und sich zumindest in der Betriebsstellung oder dauerhaft gegenüberliegen. Hierbei liegen gesonderte Querverbinder jeweils in einer Ebene senkrecht zum Längsverlauf der Stränge. Durch Formgebung bei der Herstellung der Stränge und Querverbinder lässt sich auf einfache Art und Weise ein technisch paralleler Verlauf der Stränge in der Betriebsstellung gewährleisten.

Die flexible Verbindung durch die Stränge ist vorzugsweise nicht biegeschlaff, sondern biegeelastisch, und erzeugt vorzugsweise eine bestimmte Rückstellkraft. So kann im Umlenkbogen zwischen Obertrum und Untertrum ein vordefinierter Radius gewährleistet werden. Mittels geeignet biegeelastischer Materialwahl und Formgebung der beiden Stränge kann ein Knicken der Leitung(en) auch ohne winkelbegrenzende Anschläge an den Segmenten gewährleistet werden.

Zweckmäßig ist bei biegeelastischen Strängen vorgesehen, dass die freitragende Intervalllänge der Stränge, d.h. die Längserstreckung des Freiraums bzw. der freie Abstand zwischen benachbarten Querverbindern, mindestens das Dreifache, vorzugsweise mindestens das Fünffache der Strangstärke, d.h. des Strangdurchmessers in der Ebene senkrecht zur Biegeachse des Umlenkbogens, beträgt. Es soll demnach vorgesehen sein, dass die freitragende Stranglänge zwischen zwei Querverbindern deutlich größer ist als die Stärke des Strangs, welche hauptsächlich dem Biegemoment am Umlenkbogen entgegenwirkt. Durch die vorgenannte Maßnahme kann auch bei relativ starken Strangformen bzw. biegesteifem Strangmaterial, beispielsweise für hohe Zugkräfte, mit typischen spritzgussfähigen Kunststoffen eine hinreichende Biegeflexibilität gewährleistet werden. Der größte Diameter eines Strangs ist zweckmäßig jedenfalls auch deutlich kleiner als der kleinste Diameter des Aufnahmeraums. Ähnlich zweckmäßig beträgt die freitragende Intervalllänge der Stränge jedoch höchstens das Fünfzehnfache, vorzugsweise höchstens das Zehnfache der Strangstärke, d.h. des Strangdurchmessers in der Ebene senkrecht zur Biegeachse des Umlenkbogens. Eine entsprechende Obergrenze gewährleistet eine hinreichend große Biegesteifigkeit z.B. für freitragende horizontale Anwendungen. So lässt sich ein Durchbiegen der Leitungsführung über längere freitragende Abschnitte vermeiden, gegebenenfalls auch ohne Anschlagflächen. Bei vertikaler Anordnung ist eine hohe Biegesteifigkeit hingegen meist nicht erwünscht.

Um einen günstigen Verlauf des Umlenkbogens zu gewährleisten ist zweckmäßig vorgesehen, dass die beiden Stränge mit identischem Querschnitt und vorzugsweise seil- oder bandförmig ausgeführt sind. Hierbei kann der Querschnitt der Stränge beispielsweise kreisrund, elliptisch oder polygonal ausgeführt sein.

Unabhängig von der gewählten Formgebung der Stränge und/oder der Querverbinder wird eine günstige Lage der neutralen Faser zweckmäßig erreicht, wenn das Umfangsmaß eines Querverbinders hinreichend groß ist. Bevorzugt beträgt das Umfangsmaß, in der Ebene senkrecht zur Längsrichtung betrachtet und gemessen zwischen den beiden Strängen, jeweils mindestens das Eineinhalbfache der Breite des Aufnahmeraums auf Höhe der Stränge. Ferner liegt dieses Umfangsmaß vorzugsweise im Bereich von 30% bis 70%, vorzugsweise 40% bis 60% des Gesamtumfangs des Aufnahmeraums, ebenfalls auf Höhe des dem Querverbinder zugeordneten Halters betrachtet. Unter Umfangsmaß wird ggf. die Bogenlänge des die beiden Stränge verbindenden Kreisbogens verstanden, welcher durch den Querverbinder läuft oder den Inkreis bildet.

Eine gute Befestigung der geführten Leitungen wird mit kurzen Freiräumen erzielt, d.h. wenn die freitragende Stranglänge zwischen zwei Querverbindern nicht größer ist, als das Umfangsmaß eines Halters, vorzugsweise nicht größer als das halbe Umfangsmaß eins Halters.

Eine erfindungsgemäße Leitungsführung kann aus unterschiedlichen Materialien hergestellt werden. Besonders vorteilhaft ist die gesamte Leitungsführung einstückig aus einem Kunststoff hergestellt, insbesondere im Spritzgussverfahren aus einem technischen Polymerkunststoff. Besonders bevorzugt wird die Leitungsführung insgesamt bzw. vollständig aus einem Stück hergestellt, z.B. aus einem Thermoplast.

Bevorzugt wird vorgesehen, dass jedes Segment der Leitungsführung Befestigungsmittel umfasst für eine kraft- und/oder formschlüssige Befestigung der Endsegmente der Leitungsführung. So kann die Leitungsführung mittels passender Gegenstücke am beweglichen Mitnehmer und am feststehenden Anschlusspunkt befestigt werden. Die Befestigungsmittel könnten ebenfalls verwendet werden, um einzelne einstückig hergestellte Längsabschnitte miteinander zu einer Leitungsführung mit größerer Gesamtlänge zu verbinden, z.B. mittels geeigneter Kupplungsstücke.

Die Befestigungsmittel können insbesondere im Spritzgussverfahren mitgeformt werden. An jedem Segment, insbesondere an jedem Verschluss und/oder an jedem Querverbinder kann beispielsweise ein Kopf mit seitlichen Rastnuten vorgesehen sein. Wenn jedes der einteilig hergestellten Segmente der Leitungsführung entsprechende Befestigungsmittel aufweist, kann die Leitungsführung in einer Standardlänge hergestellt werden und je nach benötigter Länge auf das gewünschte Maß zugeschnitten werden, z.B. durch Trennen der Stränge. Entsprechend weisen nach dem Zuschneiden an endseitig liegende Segmente der Leitungsführung stets auch geeignete Befestigungsmittel auf zur Befestigung an einer ersten, feststehenden Anschlussstelle und an einer zweiten, beweglichen Anschlussstelle.

Die erfindungsgemäße Leitungsführung lässt sich besonders kostengünstig herstellen und eignet sich demnach insbesondere, aber nicht ausschließlich, für die Automobilindustrie. Sie kann beispielsweise eingesetzt werden zum Verbinden eines Kraftfahrzeugsitzes mit elektrischen Versorgungs- und/oder Signalleitungen, etwa für Sitzheizung, Elektromotoren zur Sitzeinstellung, Sitzbelegungserkennung usw.

Dementsprechend betrifft die Erfindung ferner eine Anordnung umfassend einen Kraftfahrzeugsitz und mindestens eine elektrische Versorgungs- und/oder Signalleitung sowie eine erfindungsgemäße Leitungsführung gemäß der vorliegenden Beschreibung, welche die Versorgungs- und/oder Signalleitung schützt und führt.

Weitere Vorteile, Merkmale und Anwendungsbeispiele der Erfindung ergeben sich aus der nachfolgenden Beschreibung bevorzugter Ausführungsbeispiele in Verbindung mit den anliegenden Zeichnungen. Hierbei zeigen:
- FIG.1A-1B: ein erstes Ausführungsbeispiel einer Leitungsführung in Betriebsanordnung, in Seitenansicht (FIG.1A) und im Querschnitt (FIG.1B);
- FIG.2A-2B: die Leitungsführung aus FIG.1A-1B nach dem Entformen aus einem Spritzgusswerkzeug, in perspektivischer Ansicht (FIG.2A) und in Frontansicht (FIG.2B);
- FIG.3A-3B: ein zweites Ausführungsbeispiel einer erfindungsgemäßen Leitungsführung in Betriebsanordnung, in Seitenansicht (FIG.3A) und im Querschnitt (FIG.3B);
- FIG.3C: einen perspektivischen Vergrößerungsausschnitt eines mechanischen Verschlusses der Leitungsführung aus FIG.3A-3B;
- FIG.4: die Leitungsführung aus FIG.3A-3C in perspektivischer Ansicht nach dem Entformen aus einem Spritzgusswerkzeug;
- FIG.5A-5B: ein drittes Ausführungsbeispiel einer erfindungsgemäßen Leitungsführung in schematischer Draufsicht (FIG.5A) und im schematischem Querschnitt (FIG.5B);

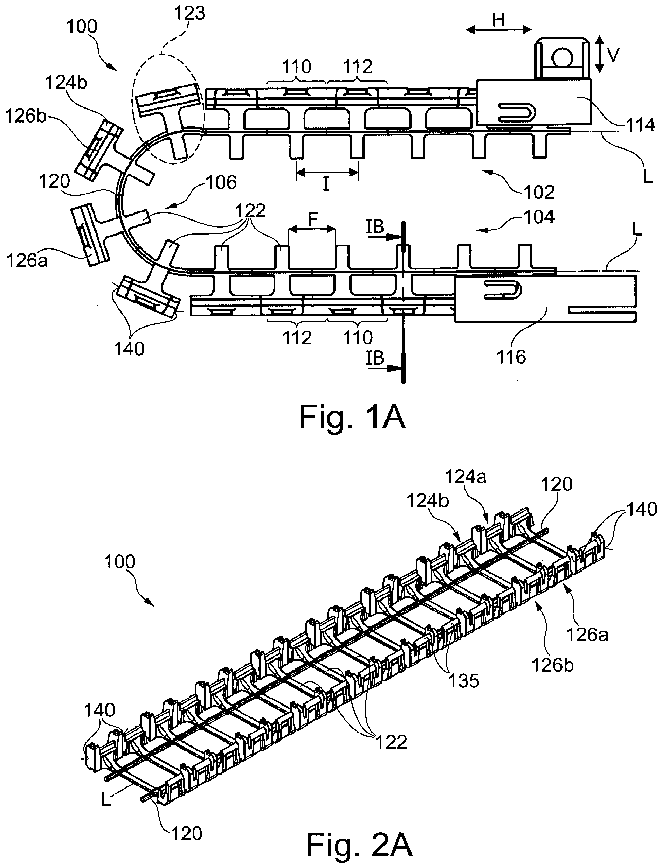

In FIG.1A-1B ist eine erfindungsgemäße Leitungsführung allgemein mit 100 bezeichnet. Die Leitungsführung 100 bildet einen Obertrum 102, einen Untertrum 104 und einen verfahrbaren Umlenkbogen 106 zwischen Obertrum 102 und Untertrum 104. Die Leitungsführung 100 ist insgesamt einstückig hergestellt und umfasst eine Vielzahl einzelner Segmente 110, 112. Hierbei alternieren in Längsrichtung Segmente 110 eines ersten Typs mit Segmenten 112 eines zweiten Typs.

Das Endsegment des Obertrums 102 ist an einem separat hergestellten Mitnehmer 114 befestigt. Beim Mitnehmer 114 kann es sich z.B. um ein Verbindungsteil speziell zum Befestigen von Leitungen an einem hier nicht näher gezeigten Kfz-Fahrersitz (siehe FIG.6) handeln. Entsprechend ist das Endsegment des Untertrums 104 an einer separaten Montageplatte 116 befestigt. Die Montageplatte 116 dient z.B. zur Befestigung am Fahrzeugboden.

Wie ein Vergleich mit FIG.2A-2B veranschaulicht, umfasst die Leitungsführung 100 zwei durchgehend einstückig mit den einzelnen Segmenten 110, 112 hergestellte Stränge 120. Die Stränge 120 gewährleisten die flexible Verbindung der einzelnen Segmente 110, 112 und sind entsprechend biegeelastisch ausgeführt. Der Mitnehmer 114 kann demnach gemäß den Doppelpfeilen H, V horizontal oder vertikal gegenüber der Montageplatte 116 und unter entsprechender Verformung der Leitungsführung 100 bewegt werden. Die Leitungsführung 100 verhindert hierbei u.a. ein Knicken der Leitungen (nicht gezeigt) und gewährleistet trotz frei einstellbarer Höhen- und Längsposition des Mitnehmers 114 eine sichere, geschützte und definierte Führung der nicht näher gezeigten Versorgungsleitungen.

Anders als FIG.1A-1B zeigen FIG.2A-2B die Leitungsführung 100 nicht in der betriebsbereiten Anordnung, sondern nach dem Entformen aus einem Spritzgusswerkzeug. Nach dem Entformen ist die Leitungsführung 100 zunächst ein näherungsweise flächiges Gebilde. FIG.2A zeigt eine Vielzahl einzelner Querverbinder 122, welche ebenfalls einteilig bzw. einstückig mit den einzelnen Strängen 120 hergestellt sind. Die Querverbinder 122 verbinden somit die Stränge 120. Die Querverbinder 122 verlaufen im Wesentlichen senkrecht zur Längsrichtung L bzw. zu den Strängen 120. Sie sind im ersten Ausführungsbeispiel nach FIG.1A-1B u. FIG.2A-B durchgehend flachbandförmig mit einem flachen, etwa rechteckigen Querschnitt. Jeder Querverbinder 122 ist zugleich Bestandteil eines Halters 123. Jeweils in Verlängerung der Querverbinder 122 sind jeweils erste und zweite Verschlussteile 124a, 126a; 124b, 126b eines mechanischen Verschlusses vorgesehen, welche ebenfalls Bestandteile des entsprechenden Halters 123 sind. Die Verschlussteile 124a, 126a; 124b, 126b sind über verjüngende Querfortsätze an den Strängen 120 befestigt und einstückig an die Stränge 120 angeformt. An jeder Seite der geöffneten bzw. flach angeordneten Leitungsführung 100 wechseln sich erste Verschlussteile 124a, 124b und zweite Verschlussteile 126a, 126b in Längsrichtung ab.

Durch ein Biegen der Querverbinder 122 um die Längsachse L und das Schließen der Halter 123 der einzelnen Segmente 110, 112 wird die betriebsbereite Anordnung aus FIG.1A-1B erreicht. Die Querverbinder 122 sind insgesamt bzw. vollständig um die Längsachse L biegsam bzw. krümmbar ausgeführt und nehmen erst, wenn der entsprechende Halter 123 geschlossen ist, einen bogenförmigen Verlauf um die Längsachse L an. Im vorliegenden Beispiel ist der Verlauf der Querverbinder 122 etwa kreisbogenförmig. In jedem Segment 110, 112 bildet jeweils genau ein Querverbinder 122 zusammen mit den zusammenwirkenden Verschlussteilen 124a, 126a bzw. 124b, 126b genau eines mechanischen Verschlusses einen bügelförmigen Halter 123 für die Leitung(en).

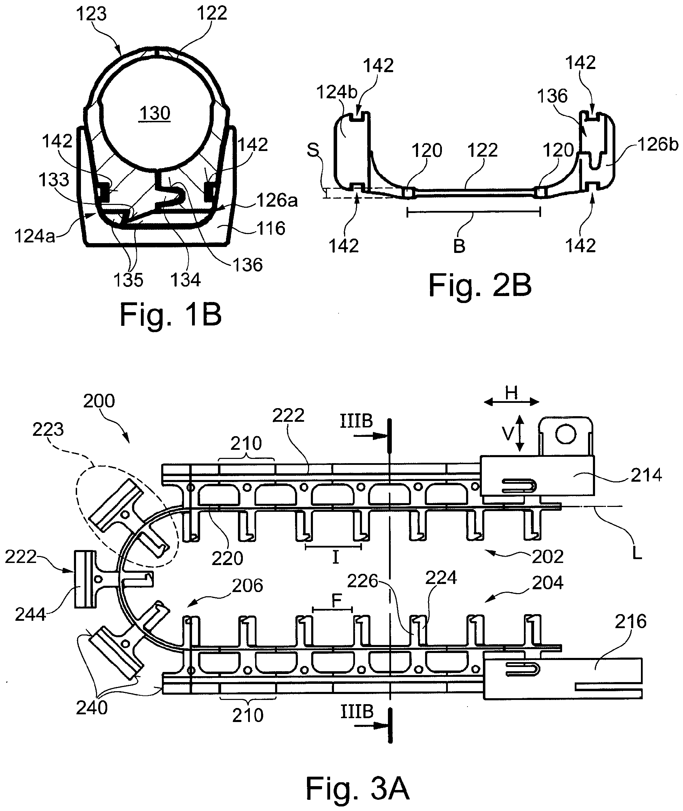

Durch die Vielzahl einzelner Halter 123 werden die Leitungen in einem umfänglich geschlossenen Aufnahmeraum 130 quer zur Längsrichtung L gehalten, wie aus FIG.1B ersichtlich. Die Leitungen werden bei offenem Halter 123 in den Aufnahmeraum 130 eingelegt und sind in Schließstellung des Halters 123 quer zur Längsrichtung L gehalten.

FIG.1B und FIG.2A-2B zeigen Aufbau und Wirkweise der mechanischen Verbinder bzw. Verschlussteile 124a, 126a bzw. 124b, 126b. Die Verschlussteile 124a, 126a des einen Typs und die Verschlussteile des anderen Typs 124b, 126b sind in der Funktion identisch und jeweils formschlüssig ausgeführt. Der erste Verschlussteil 124a, 124b weist eine Rastkante 133 auf, welche ein Schnapphaken 135 des zweiten Verschlussteils 126a, 126b hintergreift. Ferner ist am ersten Verschlussteil 124a, 124b ein Zentrierzapfen 134 vorgesehen, welcher passend in eine Aussparung 136 des zweiten Verschlussteils 126a, 126b greift, um die Verschlussteile aufeinander auszurichten. Die Verschlussteile 124a, 126a bzw. 124b, 126b bilden einen mechanischen Schnappverschluss.

Durch die Art der Verschlussteile 124a, 126a bzw. 124b, 126b unterscheiden sich die Typen der Segmente 110, 112. Die einen ersten Verschlussteile 124a weisen im Gegensatz zu den anderen ersten Verschlussteilen 124b stirnseitige Anschlagflächen 140 auf. Analog weisen die zweiten Verschlussteile 126b, im Gegensatz zu den anders geformten zweiten Verschlussteilen 126a, stirnseitige Anschlagflächen 140. Die Anschlagflächen 140 der ersten Verschlussteile 124a wirken mit den Anschlagflächen 140 der zweiten Verschlussteile 126b zusammen, um ein Durchbiegen des Obertrums 102 (s. FIG.1A) zu verhindern. Jedes Paar aus zwei geschlossenen Verschlussteilen 124a, 126a bzw. 124b, 126b bildet hierzu, wie FIG.1A zeigt, einen plattenförmigen Klotz bzw. Block, mit den Anschlagflächen 140 als stirnseitigen Begrenzungen in der Längsrichtung L. Die Anschlagflächen 140 stehen senkrecht zur Längsrichtung L der Stränge 120. Der Innenabstand zwischen den Anschlagflächen 140 (die Längsabmessung der Verschlussteile 124a, 126b mit Anschlagflächen 140) ist leicht grösser eingestellt, als die regelmäßige Segmentlänge I der Segmente 110, 112. So wird eine Vorspannung im Obertrum 102 erzeugt. Dies kann durch das Alternieren der Verschlussteile 124a, 124b bzw. 126a, 126b in Längsrichtung L auch bei einer weitgehend flachen Spritzgussform erreicht werden. Den Anschlagflächen 140 gegenüberliegende Seiten der Verschlussteile 124b und 126a sind abgeschrägt und wirken beim Schließen mit entsprechenden Schrägflächen innen an den konjugierten Verschlussteilen 124a bzw. 126b zentrierend zusammen. Nebst der Bereitstellung von Anschlagflächen 140 hat die platten- oder klotzförmige Gestalt der geschlossenen Verschlussteile 124a, 126a bzw. 124a, 126b auch den Vorteil, einen Schutzschild gegen Außeneinwirkung zu bieten.

Wie am besten aus FIG.1B und FIG.2B ersichtlich, sind beidseitig an den Verschlussteilen 124a, 124b bzw. 126a, 126b in Längsrichtung L verlaufende, seitliche Rastnuten 142 vorgesehen. Die Rastnuten 142 dienen bei geschlossenen Verschlussteilen 124a, 126a bzw. 124b, 126b als Befestigungsmittel der Segmente 110, 112 im Endbereich. Im gezeigten Beispiel aus FIG.1A-1B wirken die Rastnuten 142 form- und kraftschlüssig zusammen mit Teilen am Mitnehmer 114 bzw. an der Montageplatte 116, nach dem Prinzip einer Feder/Nut-Befestigung (FIG.1B). Die Rastnuten 142 sind an jedem der Segmente 110, 112 als Befestigungsmittel vorgesehen.

Der Vergleich von FIG.1B und FIG.2B zeigt, dass das Umfangsmaß B der Querverbinder 122, gemessen zwischen den Strängen 120, in etwa 40-60% des gesamten Umfangs des Aufnahmeraums 130 beträgt. So liegen, im Querschnitt betrachtet, die Stränge 120 im Wesentlichen auf halber Höhe und seitlich des Aufnahmeraums 130, wodurch eine besonders günstige Lage der neutralen Faser erzielt wird. Dementsprechend sollte das Umfangsmaß B bei elliptischem oder polygonförmigem Querschnitt des Aufnahmeraums zumindest das 1,5fache der Breite des Aufnahmeraums 130 auf Höhe der neutralen Faser betragen.

FIG.1B zeigt ferner, dass jeder Querverbinder 122 in einer Querschnittsebene mit den jeweils zwei Verschlussteilen 124a, 126a bzw. 124b, 126b, d.h. auf etwa der gleichen Längsposition liegt.

Die beiden Stränge 120 sind biegeelastisch und bilden einen Umlenkbogen 106 mit vordefiniertem Radius, ohne winkelbegrenzend wirkende Anschläge (s. FIG.1A). Die beiden Stränge 120 haben den gleichen, identischem Querschnitt, z.B. gemäß FIG.2B, einen vierkantförmigen Querschnitt, wobei in Betriebsstellung nach FIG.1A, die lateralen Seiten etwa vertikal bzw. senkrecht zur Krümmungsachse des Umlenkbogens 106 verlaufen. Auch andere Querschnitte der Stränge 120, etwa kreisrund, elliptisch, hexagonal usw. sind denkbar. Aus Gründen der Biegeelastizität beträgt das Verhältnis der freitragenden Intervalllänge F der Stränge 120 zwischen zwei benachbarten Querverbindern 122 zur Strangstärke S eines Strangs 120 zweckmäßig: F/S ≥ 3, vorzugsweise F/S ≥ 5. Bei Anwendungen in denen die Leitungsführung 100 freitragend ist, ist es zweckmäßig ein Durchbiegen der Trume 102, 104, auch des Untertrums 104, zu vermeiden hierzu, beträgt das Verhältnis zweckmäßig: F/S ≤ 15, vorzugsweise F/S ≤ 10. Bevorzugt sind die Stränge 120 jedenfalls seilförmig ausgeführt, d.h. mit etwa kreisrundem oder quadratischem Querschnitt und mit einer Längserstreckung deutlich grösser als jeder Querschnittsdiagonalen.

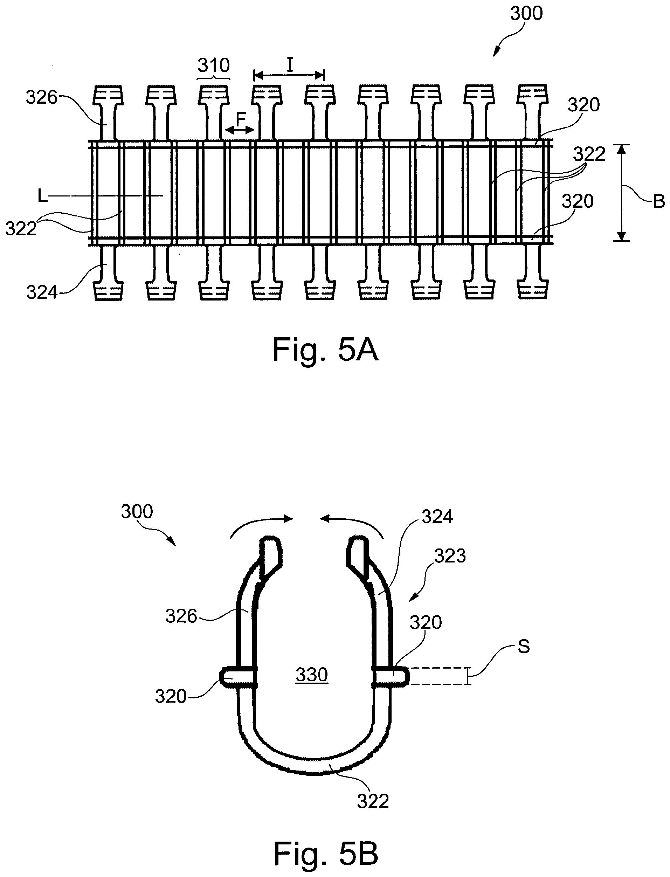

Die Stränge 120 verlaufen technisch parallel und liegen in der Ausführung nach FIG.1A-1Bu. 2A-2B erst in Betriebsstellung einander bezüglich des Aufnahmeraums 130 diametral gegenüber. Im gezeigten Ausführungsbeispiel ist in regelmäßigem Längsabstand (Segmentlänge I) jeweils in jedem Glied genau ein gesonderter Querverbinder 122 vorgesehen. Natürlich könnten auch z.B. zwei dünnere Querverbinder (siehe FIG.5A-5B) längsversetzt gegenüber dem jeweiligen mechanischen Verschluss vorgesehen sein. Zum erhöhten Schutz gegen Fremdeinwirkung ist auch eine über einige Segmente quasi durchgehende Querverbinderfläche mit kleineren Aussparungen zur Vermeidung von Falten im Umlenkbogen 106 denkbar.

In bevorzugter Ausführung ist die gesamte Leitungsführung 100 aus einem Stück, d.h. einstückig aus einem technischen Kunststoff, z.B. einem thermoplastischen Polymer hergestellt. So kann die Leitungsführung 100 insbesondere aus einem Guss durch Spritzgießen hergestellt sein und ist nach dem Entformen (FIG.2A-2B) ohne weitere Verarbeitungsschritte einsatzbereit.

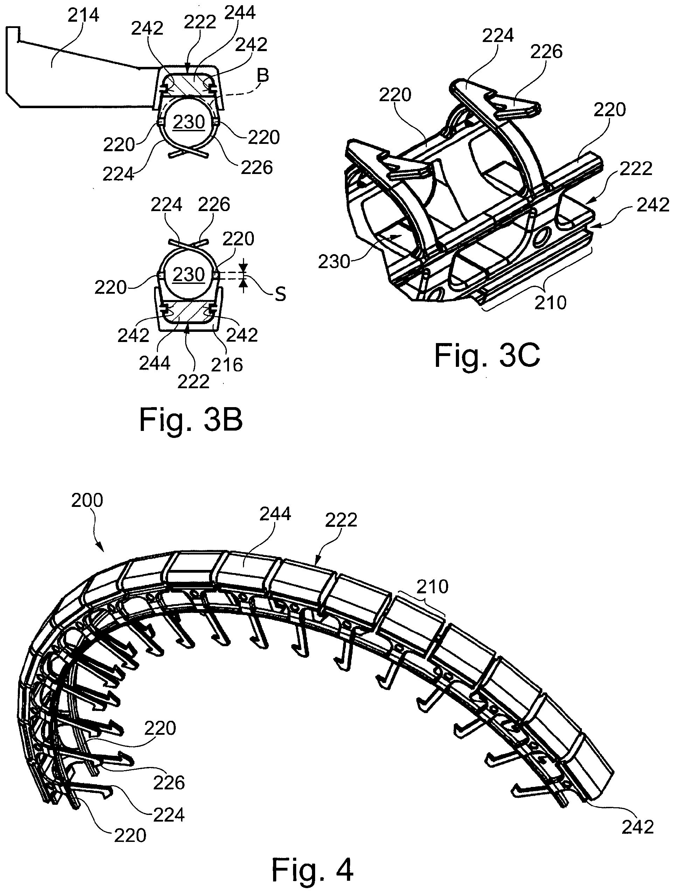

Ein alternatives Ausführungsbeispiel zeigen FIG.3A-3C und FIG.4 einer Leitungsführung 200. Um hundert erhöhte Bezugszeichen bezeichnen Teile, welche in Aufbau und/oder Wirkweise denjenigen aus FIG.1A-2B entsprechen. Zur Vereinfachung wird nachfolgend lediglich auf die wesentlichen Unterschiede eingegangen.

Die Leitungsführung 200 ist ebenfalls insgesamt einstückig im Spritzgussverfahren hergestellt. Die Querverbinder 222 sind jedoch nicht bandförmig biegeelastisch, sondern übernehmen, wie FIG.3A zeigt, die Funktion der klotzartigen Verschlüsse und sind demnach radial außen angeordnet. Dementsprechend sind die Querverbinder 222 weitestgehend biegesteif mit einem dauerhaft bügelförmigen Verlauf um die Längsrichtung L hergestellt. Folglich liegen Anschlagflächen 240 gegen die Biegebelastung an entgegengesetzten, starren Längsvorsprüngen der Querverbinder 222.

Durch eine Herstellung in gekrümmter Anordnung mit einem Spalt zwischen den Querverbindern 222, wie in FIG.4 veranschaulicht, kann auch in der Leitungsführung 200 eine Vorspannung erzielt werden, d.h. eine Längsabmessung eines Querverbinders 222 von Anschlagfläche 240 zu Anschlagfläche 240, welche leicht grösser ist als die regelmäßige Segmentlänge I. Die Segmente 210 weisen auch jeweils genau einen Halter 223 und einen Querverbinder 222 auf, alle Segmente 210 sind allerdings identisch ausgeführt.

Der Halter 223 umfasst einen Verschluss, welcher in FIG.3A-3C bzw. FIG.4 aus zwei zusammenwirkenden Schnapphaken 224, 226 besteht, welche an Fortsätzen in Querrichtung zusammen mit den Querverbindern 222 und den Strängen 220 einteilig hergestellt sind. Die Schnapphaken 224, 226 liegen, anders als beim ersten Ausführungsbeispiel, radial innen in Bezug auf den Umlenkbogen 206. Nach Einlegen der Leitung(en), hier nicht gezeigt, werden die Schnapphaken 224, 226 der Segmente 210 miteinander verhakt bzw. verrastet wie im Ausschnitt FIG.3C näher ersichtlich.

Der Hauptunterschied liegt somit darin, dass die Querverbinder 222 als relativ starre Materialbrücken zwischen den ansonsten identisch wie in FIG.1A-2B gestalteten angeordneten Strängen 220 gestaltet sind. Die Querverbinder 222 geben demnach eine dauerhafte Lage der Stränge 220 vor. Die Querverbinder 222 haben hierbei, durch die Längsvorsprünge mit den Anschlagflächen 240, einen platten- bzw. klotzförmigen Kopfteil 244. An diesem sind seitliche Rastnuten 242 zur Befestigung am Mitnehmer 214 bzw. an der Montageplatte 216 vorgesehen. Die Verbindung der Kopfteile mit den Strängen 220 bilden verjüngte Übergänge, welche dem Aufnahmeraum 230 (FIG.3B) einen etwa kreisförmigen Querschnitt verleihen, ähnlich wie in FIG.2B. So wird Verschleiß der Leitung(en) minimiert. FIG.3A zeigt lediglich ein Endsegment 210, dessen Kopfteil mit den Rastnuten 242 an Mitnehmer 214 und Montageplatte 216 befestigt ist. Es können auch mehrere Segmente 210 des Endbereichs befestigt werden, da an jedem Segment 210 Rastnuten 242 als Befestigungsmittel vorgesehen sind.

FIG.5A-5B zeigen ein drittes, besonders einfaches Ausführungsbeispiel einer Leitungsführung 300 gemäß der Erfindung. Um hundert erhöhte Bezugszeichen bezeichnen Teile, welche in Aufbau und/oder Wirkweise den vorgenannten entsprechen.

Die Leitungsführung 300 lässt sich ebenfalls als flaches Gebilde herstellen und durch Biegen der Querverbinder 322 und Schließen der schematisch gezeigten Verschlussteile 324, 326 in die betriebsbereite Stellung bringen. Auch bei der Leitungsführung 300 verlaufen die beiden Stränge 320 im Wesentlichen parallel und liegen lateral gegenüber auf halber Höhe des Aufnahmeraums. Bei der Leitungsführung 300 sind in jedem Segment 310 jeweils zwei bandförmige Querverbinder 322 vorgesehen, so dass der regelmäßige Längsabstand F zwischen den benachbarten Querverbindern 322 geringer ist, als die Segmentlänge I. Bei der Leitungsführung 300 sind die Stränge 320 etwa bandförmig mit der Schmalseite senkrecht zur Umlenk- bzw. Biegeachse, wie in FIG.5B veranschaulicht. Aufgrund der einfacheren Formgebung kann die Leitungsführung 300 kostengünstiger hergestellt werden.

Neben den gezeigten Formen der Stränge, der Querverbinder und der mechanischen Verschlüsse liegen weitere fachmännische Varianten hiervon im Rahmen der Erfindung.

### Bezugszeichenliste

FIG.1A-1B u. 2A-2B:
   - 100: Leitungsführung
   - 102: Obertrum
   - 104: Untertrum
   - 106: Umlenkbogen
   - 110, 112: Segment
   - 114: Mitnehmer
   - 116: Montageplatte
   - 120: Strang
   - 122: Querverbinder
   - 123: Halter
   - 124: erster Verschlussteil
   - 126: zweiter Verschlussteil
   - 130: Aufnahmeraum
   - 133: Rastkante
   - 134: Zentrierzapfen
   - 135: Schnapphaken
   - 136: Aussparung
   - 140: Anschlagfläche
   - 142: Rastnut
FIG.3A-3C u. FIG.4:
   - 200: Leitungsführung
   - 202: Obertrum
   - 204: Untertrum
   - 206: Umlenkbogen
   - 210: Segment
   - 214: Mitnehmer
   - 216: Montageplatte
   - 220: Strang
   - 222: Querverbinder
   - 223: Halter
   - 224, 226: Schnapphaken
   - 230: Aufnahmeraum
   - 240: Anschlagfläche
   - 242: Rastnut
   - 244: Kopfteil
FIG. 5
   - 300: Leitungsführung
   - 310: Segment
   - 320: Strang
   - 322: Querverbinder
   - 323: Halter
   - 324, 326: Verschlussteil
   - 330: Aufnahmeraum
FIG.1-5
   - B: Umfangsmaß (Querverbinder)
   - F: freitragende Intervalllänge
   - H: Horizontalbewegung
   - I: Segmentlänge
   - L: Längsrichtung
   - S: Strangstärke
   - V: Vertikalbewegung

## Patentansprüche

1. Leitungsführung (100; 200; 300) zum geschützten Führen mindestens einer Leitung, wie zum Beispiel eines Kabels, eines Schlauchs oder dergleichen, zwischen einem festen und einem beweglichen Anschlusspunkt,
- wobei ein Längsabschnitt mit mehreren Segmenten (110, 112; 210; 310) der Leitungsführung einstückig hergestellt ist,
- jedes der mehreren Segmente einen schließbaren Halter (123; 223; 323) für die mindestens eine Leitung umfasst,
- die Leitung bei offenem Halter in einen Aufnahmeraum (130; 230; 330) eingelegt werden kann und in Schließstellung des Halters quer zur Längsrichtung (L) im Aufnahmeraum gehalten ist,
- wobei die Segmente zwecks Bildung eines Umlenkbogens (106; 206) mit vordefiniertem Radius durch eine flexible und biegeelastische Verbindung in Längsrichtung miteinander verbunden sind,
- wobei die biegeelastische Verbindung zwischen den Segmenten einen ersten flexiblen Strang (120; 220; 320) und einen zweiten flexiblen Strang (120; 220; 320) umfasst, und
- wobei mindestens ein einstückig mit den Strängen hergestellter Querverbinder (122; 222; 322) vorgesehen ist, welcher in der Schließstellung der Halter bogen- oder bügelförmig um die Längsrichtung (L) verläuft damit die beiden Stränge (120; 220; 320) seitlich des Aufnahmeraums liegen und eine den Aufnahmeraum (130; 230; 330) kreuzende neutrale Faser vorgeben.

2. Leitungsführung nach Anspruch 1, **dadurch gekennzeichnet, dass** die beiden Stränge (120; 220; 320) in Schließstellung etwa mittig seitlich des Aufnahmeraums (130; 230; 330) liegen, und das s die Stränge eine den Aufnahmeraum etwa auf halber Höhe kreuzende neutrale Faser vorgeben.

3. Leitungsführung nach Anspruch 1 oder 2, **dadurch gekennzeichnet, dass** jedes Segment (110, 112; 210; 310), insbesondere jeder Halter (123; 223; 323), jeweils einen oder mehrere gesonderten Querverbinder (122; 222; 322) aufweist.

4. Leitungsführung nach Anspruch 3, **dadurch gekennzeichnet, dass** die Querverbinder (122; 322) teilweise oder vollständig biegsam und/oder faltbar hergestellt sind und erst in der Schließstellung des entsprechenden Halters (123; 323) jeweils den bogen- oder bügelförmigen Verlauf, insbesondere einen rundbogenförmigen und/oder vieleckförmigen Verlauf, annehmen.

5. Leitungsführung nach einem der Ansprüche 3 oder 4, insbesondere nach Anspruch 3, **dadurch gekennzeichnet, dass** die Querverbinder (222) teilweise biegesteif, insbesondere vollständig biegesteif, mit einem dauerhaft bogen- oder bügelförmigen Verlauf um die Längsrichtung (L), hergestellt sind.

6. Leitungsführung nach einem der Ansprüche 1 bis 5,
**dadurch gekennzeichnet,**
**dass** jeder Halter (123; 223; 323) einen mechanischen Verschluss (124a, 126a; 124b, 126b; 224, 226; 324, 326) zum Schließen des Halters, insbesondere durch Einrasten, Verhaken, Verriegeln und/oder dergleichen, aufweist; und dass jeder mechanische Verschluss (124a, 126a; 124b, 126b) stirnseitige Anschlagflächen (140) aufweist, welche in Strecklage Biegelasten auffangen.

7. Leitungsführung nach einem der Ansprüche 1 bis 6, insbesondere nach Anspruch 5, **dadurch gekennzeichnet, dass** jeder Querverbinder (222) zwei biegesteife Längsvorsprünge mit stirnseitigen Anschlagflächen (240) aufweist, welche in Strecklage Biegelasten auffangen.

8. Leitungsführung nach Anspruch 6 oder 7, **dadurch gekennzeichnet, dass** die Längsabmessung zwischen den Anschlagflächen (140; 240) eines Segments (110, 112; 210) der Leitungsführung leicht größer ist als die regelmäßige Segmentlänge (I) in Längsrichtung.

9. Leitungsführung nach einem der Ansprüche 1 bis 8,
**dadurch gekennzeichnet, dass** jeweils ein mechanischer Verschluss (124a, 126a; 124b, 126b; 224, 226) und ein Querverbinder (122; 222) einen Halter (123; 223) bilden, vorzugsweise einen bügelartigen Halter, wobei
- bevorzugt der Verschluss und der Querverbinder auf etwa der gleichen Längsposition angeordnet sind; und/oder;
- bevorzugt der Verschluss einen Schnapphaken (135; 224, 226)) aufweist, insbesondere zwei zusammenwirkende Schnapphaken (224, 226) am Endbereich eines biegeelastischen Querfortsatzes.

10. Leitungsführung nach einem der Ansprüche 1 bis 9,
**dadurch gekennzeichnet, dass** die beiden Stränge (120; 220; 320) biegeelastisch ausgeführt sind, um den Umlenkbogen (106; 206) mit vordefiniertem Radius zu bilden und dass die freitragende Intervalllänge (F) der Stränge zwischen zwei Querverbindern mindestens das Dreifache, vorzugsweise mindestens das Fünffache, der Strangstärke (S) beträgt, wobei bevorzugt die freitragende Intervalllänge (F) der Stränge zwischen zwei Querverbindern höchstens das Fünfzehnfache, vorzugsweise höchstens das Zehnfache, der Strangstärke (S) beträgt.

11. Leitungsführung nach einem der Ansprüche 1 bis 10,
**dadurch gekennzeichnet, gekennzeichnet, dass** die beiden Stränge (120; 220; 320) mit identischem Querschnitt und seilförmig oder bandförmig ausgeführt sind; und/oder
**dass,** das Umfangsmaß des Querverbinders (122; 222; 322) zwischen den Strängen mindestens 150% der Breite des Aufnahmeraums (130; 230; 330) auf Höhe der neutralen Faser beträgt, und vorzugsweise im Bereich von 30-70%, insbesondere 40-60% des Gesamtumfangs des Aufnahmeraums.

12. Leitungsführung nach einem der Ansprüche 1 bis 11,
**dadurch gekennzeichnet, dass** die gesamte Leitungsführung (100; 200; 300) einstückig aus Kunststoff, insbesondere im Spritzgussverfahren, hergestellt ist, wobei vorzugsweise jedes Segment Befestigungsmittel (142; 242) umfasst für eine kraft- und/oder formschlüssige Befestigung der Endsegmente der Leitungsführung.

13. Leitungsführung nach einem der Ansprüche 1 bis 12,
**dadurch gekennzeichnet, dass** die beiden Stränge (120; 220; 320) im Wesentlichen parallel verlaufen und in Betriebsstellung gegenüberliegen, wobei in regelmäßigem Längsabstand (F) gesonderte Querverbinder (122; 222; 322) jeweils senkrecht zu den Strängen verlaufen.

14. Verwendung einer Leitungsführung (100; 200; 300) nach einem der Ansprüche 1 bis 13, zum Verbinden eines Kraftfahrzeugsitzes mit elektrischen Versorgungs- und/oder Signalleitungen.

15. Anordnung umfassend einen Kraftfahrzeugsitz, mindestens eine elektrische Versorgungs- und/oder Signalleitung und eine Leitungsführung nach einem der Ansprüche 1 bis 13, welche die elektrische Versorgungs- und/oder Signalleitung schützt.

## Claims

1. A line guide (100; 200; 300) for protectedly guiding at least one line like for example a cable, a hose or the like, between a fixed and a moveable connecting point,
- wherein a longitudinal portion with a plurality of segments (110, 112; 210; 310) of the line guide is produced in one piece,
- each of the plurality of segments includes a closable holder (123; 223; 323) for the at least one line,
- the line can be inserted into a receiving space (130; 230; 330) when the holder is open and is held in the closed position of the holder in the receiving space transversely relative to the longitudinal direction (L),
- wherein the segments are connected together by a flexible and flexurally elastic connection in the longitudinal direction for the purposes of forming a direction-changing arc (106; 206) with a predefined radius,
- wherein the flexurally elastic connection between the segments includes a first flexible strand (120; 220; 320) and a second flexible strand (120; 220; 320), and
- wherein at least one transverse connector (122; 222; 322) is provided which is produced in one piece with the strands and which in the closed position of the holders extends in an arcuate or loop form around the longitudinal direction (L) so that the two strands (120; 220; 320) are disposed laterally of the receiving space and predetermine a neutral fibre crossing the receiving space (130; 230; 330).

2. The line guide as set forth in claim 1 **characterised in that** in the closed position the two strands (120; 220; 320) are disposed approximately centrally laterally of the receiving space (130; 230; 330) and that the strands predetermine a neutral fibre crossing the receiving space approximately at half the height.

3. The line guide as set forth in claim 1 or claim 2 **characterised in that** each segment (110, 112; 210; 310), in particular each holder (123; 223; 323) respectively has one or more separate transverse connectors (122; 222; 322).

4. The line guide as set forth in claim 3 **characterised in that** the transverse connectors (122; 322) are produced partially or completely flexibly and/or foldably and that they respectively adopt the arcuate or loop-shaped configuration, in particular a configuration in the form of a round arc and/or in the form of a polygon, only in the closed position of the corresponding holder (123; 323) .

5. The line guide as set forth in one of claims 3 and 4, in particular as set forth in claim 3, **characterised in that** the transverse connectors (222) are produced in partially flexurally stiff form, in particular completely flexurally stiff form, with a configuration around the longitudinal direction (L), that is permanently arcuate or loop-shaped.

6. The line guide as set forth in one of claims 1 through 5 **characterised in that** each holder (123; 223; 323) has a mechanical closure (124a, 126a; 124b, 126b; 224, 226; 324, 326) for closing the holder, in particular by latching engagement, hooking, locking and/or the like; and each mechanical closure (124a, 126a; 124b, 126b) has end abutment surfaces (140) which carry bending loads in the straight position.

7. The line guide as set forth in one of claims 1 through 6, in particular as set forth in claim 5, **characterised in that** each transverse connector (222) has two flexurally stiff longitudinal projections with end abutment surfaces (240) which carry bending loads in the straight position.

8. The line guide as set forth in claim 6 or claim 7 **characterised in that** the longitudinal dimension between the abutment surfaces (140; 240) of a segment (110, 112; 210) of the line guide is slightly greater than the regular segment length (I) in the longitudinal direction.

9. The line guide as set forth in one of claims 1 through 8 **characterised in that** a mechanical closure (124a, 126a; 124b, 126b; 224, 226) and a transverse connector (122; 222) form a respective holder (123; 223), preferably a loop-like holder, wherein
- preferably the closure and the transverse connector are arranged at approximately the same longitudinal position; and/or;
- preferably the closure has a snap hook (135; 224, 226), in particular two cooperating snap hooks (224, 226) at the end region of a flexurally elastic transverse projection.

10. The line guide as set forth in one of claims 1 through 9 **characterised in that** the two strands (120; 220; 320) are flexurally elastic to form the direction-changing arc (106; 206) of a predefined radius and that the self-supporting interval length (F) of the strands between two transverse connectors is at least three times and preferably at least five times the strand thickness (S), wherein preferably the self-supporting interval length (F) of the strands between two transverse connectors is at most fifteen times and preferably at most ten times the strand thickness (S).

11. The line guide as set forth in one of claims 1 through 10 **characterised in that** the two strands (120; 220; 320) are of an identical cross-strand and are of a cable or band configuration; and/or
that the peripheral dimension of the transverse connector (122; 222; 322) between the strands (120) is at least 150% of the width of the receiving space (130; 230; 330) at the height of the neutral fibre and is preferably in the region of 30-70%, in particular 40-60%, of the overall periphery of the receiving space.

12. The line guide as set forth in one of claims 1 through 11 **characterised in that** the overall line guide (100; 200; 300) is produced in one piece from plastic, in particular in an injection moulding process, wherein preferably each segment includes fixing means (142; 242) for force-locking and/or positively locking fixing of the end segments of the line guide.

13. The line guide as set forth in one of claims 1 through 12 **characterised in that** the two strands (120; 220; 320) extend substantially parallel and are in mutually opposite relationship in the operative position, wherein separate transverse connectors (122; 222; 322) respectively extend perpendicularly to the strands at a regular longitudinal spacing (F).

14. Use of a line guide (100; 200; 300) as set forth in one of claims 1 through 13 for connecting a motor vehicle seat to electrical supply and/or signal lines.

15. An arrangement including a motor vehicle seat, at least one electrical supply and/or signal line and a line guide as set forth in one of claims 1 through 13 which protects the electrical supply and/or signal line.

## Revendications

1. Un guide de ligne (100 ; 200 ; 300) pour guider de manière protégée au moins une ligne comme par exemple un câble, un tuyau ou similaire, entre un point de connexion fixe et un point de connexion mobile,
- dans lequel une partie longitudinale ayant une pluralité de segments (110, 112 ; 210 ; 310) du guide de ligne est réalisée en une seule pièce,
- chacun de la pluralité de segments comprend un dispositif de maintien fermable (123 ; 223 ; 323) pour l'au moins une ligne,
- la ligne pouvant être insérée dans un espace de réception (130 ; 230 ; 330) lorsque le dispositif de maintien est ouvert et dans la position fermée du dispositif de maintien la ligne étant maintenue transversalement à la direction longitudinale (L) dans l'espace de réception,
- les segments étant reliés entre eux dans le sens longitudinal par une liaison flexible et élastique en flexion afin de former un arc de changement de direction (106 ; 206) avec un rayon prédéfini,
- la connexion élastique en flexion entre les segments comprenant un premier brin section flexible (120 ; 220 ; 320) et un deuxième brin flexible (120 ; 220 ; 320), et
- dans lequel il est prévu au moins un connecteur transversal (122 ; 222 ; 322) qui est réalisé d'une seule pièce avec les brins et qui, dans la position fermée des dispositifs de maintien, s'étend en forme d'arc ou de boucle autour de la direction longitudinale (L), de sorte que les deux brins (120 ; 220 ; 320) sont disposés latéralement par rapport à l'espace de réception et déterminent une fibre neutre traversant l'espace de réception (130 ; 230 ; 330).

2. Guide de ligne selon la revendication 1, **caractérisé en ce que**, en position fermée, les deux brins (120 ; 220 ; 320) sont disposés approximativement au centre et latéralement par rapport à l'espace de réception (130 ; 230 ; 330) et que les brins prédéterminent une fibre neutre traversant l'espace de réception approximativement à la moitié de la hauteur.

3. Guide de ligne selon la revendication 1 ou la revendication 2, **caractérisé en ce que** chaque segment (110, 112 ; 210 ; 310), en particulier chaque dispositif de maintien (123 ; 223 ; 323), possède respectivement un ou plusieurs connecteurs transversaux séparés (122 ; 222 ; 322).

4. Guide de ligne selon la revendication 3, **caractérisé en ce que** les connecteurs transversaux (122 ; 322) sont fabriqués de manière partiellement ou totalement flexible et/ou pliable et **en ce que** dans la position fermée du dispositif de maintien correspondant (123 ; 323) seulement ils adoptent respectivement la configuration en forme d'arc ou de boucle, en particulier une configuration en forme d'arc de cercle et/ou en forme de polygone.

5. Guide de ligne selon l'une des revendications 3 ou 4, en particulier selon la revendication 3, **caractérisé en ce que** les connecteurs transversaux (222) sont réalisés sous une forme partiellement rigide à la flexion, en particulier sous une forme complètement rigide à la flexion, avec une configuration autour de la direction longitudinale (L), qui est en permanence en forme d'arc ou de boucle.

6. Guide de ligne selon l'une des revendications 1 à 5, **caractérisé en ce que** chaque dispositif de maintien (123 ; 223 ; 323) présente une fermeture mécanique (124a, 126a ; 124b, 126b ; 224, 226 ; 324, 326) pour la fermeture du dispositif de maintien, en particulier par enclenchement, accrochage, verrouillage et/ou similaire; et chaque fermeture mécanique (124a, 126a ; 124b, 126b) présente des surfaces de butée d'extrémité (140) qui supportent des charges de flexion en position droite.

7. Guide de ligne selon l'une des revendications 1 à 6, en particulier selon la revendication 5, **caractérisé en ce que** chaque connecteur transversal (222) présente deux saillies longitudinales rigides en flexion avec des surfaces de butée d'extrémité (240) qui supportent des charges de flexion en position droite.

8. Guide de ligne selon la revendication 6 ou la revendication 7, **caractérisé en ce que** la dimension longitudinale entre les surfaces de butée (140 ; 240) d'un segment (110, 112 ; 210) du guide de ligne est légèrement supérieure à la longueur régulière du segment (I) dans la direction longitudinale.

9. Guide de ligne selon l'une des revendications 1 à 8, **caractérisé en ce qu'**une fermeture mécanique (124a, 126a ; 124b, 126b ; 224, 226) et un connecteur transversal (122 ; 222) forment chacun un dispositif de maintien (123 ; 223), de préférence un dispositif de maintien en forme de boucle, dans lequel
- de préférence, la fermeture et le connecteur transversal sont disposés à peu près dans la même position longitudinale ; et/ou;
- de préférence, la fermeture comporte un mousqueton (135 ; 224, 226), en particulier deux mousquetons coopérants (224, 226) dans la région terminale d'une protubérance transversale élastique en flexion.

10. Guide de ligne selon l'une des revendications 1 à 9, **caractérisé en ce que** les deux brins (120 ; 220 ; 320) sont élastiques en flexion pour former l'arc de changement de direction (106 ; 206) d'un rayon prédéfini et **en ce que** la longueur d'intervalle autoportante (F) des brins entre deux connecteurs transversaux est au moins trois fois et de préférence au moins cinq fois l'épaisseur de brin (S), la longueur d'intervalle autoportante (F) des brins entre deux connecteurs transversaux étant de préférence au maximum de quinze fois et de préférence au maximum de dix fois l'épaisseur de brin (S).

11. Guide de ligne selon l'une des revendications 1 à 10, **caractérisé en ce**
**que** les deux brins (120 ; 220 ; 320) ont une section transversale identique et ont une configuration en câble ou en bande ; et/ou
**que** la dimension périphérique du connecteur transversal (122 ; 222 ; 322) entre les brins (120) est au moins égale à 150% de la largeur de l'espace de réception (130 ; 230 ; 330) à la hauteur de la fibre neutre et se situe de préférence aux alentours de 30-70%, en particulier 40-60%, de la périphérie globale de l'espace de réception.

12. Guide de ligne selon l'une des revendications 1 à 11, **caractérisé en ce que** le guide de ligne entier (100 ; 200 ; 300) est fabriqué d'une seule pièce en matière plastique, en particulier dans un procédé de moulage par injection, chaque segment comprenant de préférence des moyens de fixation (142 ; 242) pour la fixation par force et/ou par engagement positif des segments d'extrémité du guide de ligne.

13. Guide de ligne selon l'une des revendications 1 à 12, **caractérisé en ce que** les deux brins (120 ; 220 ; 320) s'étendent sensiblement parallèlement et sont mutuellement opposés en position de fonctionnement, dans laquelle des connecteurs transversaux séparés (122 ; 222 ; 322) s'étendent respectivement perpendiculairement aux brins avec un espacement longitudinal régulier (F).

14. Utilisation d'un guide de ligne (100 ; 200 ; 300 selon l'une des revendications 1 à 13 pour le raccordement d'un siège de véhicule à moteur à des lignes d'alimentation électrique et/ou de signalisation.

15. Un dispositif comprenant un siège de véhicule automobile, au moins une ligne d'alimentation électrique et/ou de signalisation et un guide de ligne tel que défini dans l'une des revendications 1 à 13, qui protège la ligne d'alimentation électrique et/ou de signalisation.
